# NEW EUROPEAN PATENT SPECIFICATION

(11) **EP 0 848 836 B2**
(45) Date of publication and mention of the opposition decision: **07.06.2006**
(45) Mention of the grant of the patent: 11.12.2002
(21) Application number: 96930446.8
(22) Date of filing: 06.09.1996
(51) Int. Cl.: G02B 6/44, G02B 6/245

(54) **OPTICAL GLASS FIBER RIBBON ASSEMBLY AND RADIATION CURABLE MATRIX FORMING COMPOSITION**
OPTISCHES BANDKABEL UND STRAHLENVERNETZBARE MATRIXZUSAMMENSETZUNG
ENSEMBLE RUBAN DE FIBRES DE VERRE OPTIQUES ET COMPOSITION DURCISSABLE SOUS RAYONNEMENT, FORMANT UNE MATRICE

(30) Priority: 07.09.1995 US 603675
(43) Date of publication of application: 24.06.1998
(73) Proprietor: DSM IP Assets B.V., 6411 TE Heerlen (NL)
(72) Inventor: SCHOUTEN, James, John, Elmhurst, IL 60126 (US); SZUM, David, M., Elmhurst, IL 60126 (US)
(86) International application number: PCT/NL1996/000349
(87) International publication number: WO 1997/009648

(56) References cited:
- EP-A- 0 349 206
- EP-A- 0 350 900
- EP-A- 0 407 004
- US-A- 4 844 604
- US-A- 5 373 578
- US-A- 5 522 939
- US-A- 5 530 782
- PATENT ABSTRACTS OF JAPAN vol. 015, no. 122 (P-1184), 26 March 1991 & JP,A,03 010203 (NIPPON TELEGR & TELEPH CORP), 17 January 1991,
- PATENT ABSTRACTS OF JAPAN vol. 012, no. 216 (P-719), 21 June 1988 & JP,A,63 013008 (FUJIKURA LTD), 20 January 1988,
- "Textbook of Polymer Science", 3rd edition; Fred W. Billmeyer jr., 1984, John Wiley & Sons; pages 337-340

## Description

### 1. Field of Invention

This invention relates to an optical glass fiber ribbon assembly comprising a plurality of coated optical glass fibers and a matrix material which bonds the plurality of individually coated optical glass fibers together into a ribbon format. The matrix material possesses the combination of properties to allow both mid-span access of the optical glass fibers using a solvent stripping method and end-access at a terminus of the optical glass fibers using a heat stripping method. This invention also relates to a radiation-curable, matrix-forming composition.

### 2. Description of Related Art

Forthe purpose of multi-channel signal transmission, ribbon assemblies containing a plurality of optical fibers have been used. Such optical glass fiber ribbon assemblies are widely used in tele-communications.

A typical ribbon assembly is made by bonding together a plurality of parallel oriented, individually coated optical glass fibers with a matrix material. The matrix material has the function of holding the individual optical glass fibers in alignment and protecting the same during handling and the installation environment. Often, the fibers are arranged in ribbon structures, having a generally flat, strand like structure containing generally from about 4 to 24 fibers. Depending upon the application, a plurality of resulting ribbon assemblies can be combined into a cable which has from several up to about one thousand individually coated optical glass fibers.

The coated optical glass fibers are usually provided with an outer colored layer in order to be able to identify the individual glass fibers. Commonly, the optical glass fibers are first individually coated with at least one coating that adheres to the glass fiber, and thereafter coated with a UV curable ink adhering to the coating. Thereafter, the required number of thus color coated optical glass fibers are bonded together in the ribbon assembly by use of a matrix material.

The coating, the ink, and the matrix material generally are UV curable compositions. An example of a ribbon assembly is described in published European patent application No. 194891. In general, a plurality of ribbon assemblies may then be combined together in a cable, as disclosed in U.S. patent No. 4,906,067.

It is commonly required that, in use, branching fiber connections must be made at a location intermediate to the respective termini of a given length of ribbon. Accessing the individual fibers in this manner is commonly referred to as "mid-span access" and presents special problems. Normal methods and tools for accessing the end or terminus of the ribbon assembly are generally not well adapted or are inoperable for providing mid-span access.

One common method for providing mid-span access is to contact the matrix material with a solvent, such as ethanol or isopropyl alcohol. Such a solvent must have the ability of swelling or softening the matrix material. At the same time, the solvent should be selected so as not to swell the coatings on the individual optical glass fibers. The swelling of the matrix material weakens that matrix material so that it can then be mechanically removed by mild scrubbing or similar mechanical means to remove the matrix material and thereby provide access to the individual, but still coated and color-identifiable, optical glass fibers. The matrix resin material and the solvent should be chosen together in order to be useful for this type of solvent stripping method. An example of this solvent stripping method is described in the AT&T brochure "D-182355 Accuribbon™ Single Fiber Access" (March 3, 1991).

It is also commonly required that in use separate lengths of ribbon assemblies must be connected together at their ends (hereinafter "end-access"). Typically, this is achieved by fusion of respective ends of the fibers. For this purpose, it is important to secure a connection with minimum signal loss or attenuation.

A common method of for achieving end-access of the optical glass fibers at a terminus of the ribbon assembly is to use a heat stripping method. A heat stripping method typically utilizes a heat stripping tool. Such a tool consists of two plates provided with heating means. An end section of the ribbon assembly is pinched between the two heated plates and the heat of the tool softens the matrix material and softens the coatings on the individual optical glass fiber. The heat-softened matrix material and the heat-softened coatings present on the individual optical glass fibers can then be removed to provide bare optical glass fiber ends, at which the connections can be made. A knife cut is often used to initiate a break in the matrix material. Typically, only a 1/4 to 1/2 inch section of the matrix material and coatings on the optical glass fibers need be removed so that identification of the bare individual optical glass fibers can be made by tracing back along the bare optical fiber until the colored coating is seen.

U.S. patent No. 5,373,578 discloses a ribbon assembly containing a plurality of coated optical glass fibers. Each of the optical glass fibers is coated with a primary coating which is adjacent to the optical glass fiber, with a secondary coating and ink coating on the primary coating. The primary coating is modified so that adhesion between the primary coating and the optical glass fiber is reduced. This reduction in adhesion facilitates easy removal of the heat-softened primary coating when using a heat stripping method. While this patent discloses, at column 5, lines 10-13, that the adhesion between the primary coating and the optical glass fiber should be sufficient to prevent delamination of the primary coating from the optical glass fiber, any reduction in the adhesion between the primary coating and the optical glass fiber increases the possibility of such undesirable delamination In the presence of moisture. Delamination of the primary coating from the optical glass fiber can lead to degradation of the optical glass fiber and attenuation of the signal transmitted through the optical glass fiber.

US-A-4,844,604 discloses an optical glass fiber assembly of the type defined in the first part of claim 1 and which comprises a plurality of coated optical glass fibers and a matrix material binding together said plurality of coated optical glass fibers.

EP-A-349,206 discloses also a ribbon assembly comprising coated optical glass fibers bonded together with a matrix material. Both references are silent on a solvent stripping method.

There is a therefore a need for a fiber assembly having a matrix material which possesses the combination of functional properties so as to permit both easy and effective mid-span access of the optical glass fibers using a solvent stripping method, and also easy and effective end-access of the optical glass fibers using a heat stripping method. Conventional fiber assemblies do not contain matrix materials which posses the combination of functional properties permitting both mid-span access of the optical glass fibers using a solvent stripping method and end-access of the optical glass fibers using a heat stripping method, as described herein.

### SUMMARY OF THE INVENTION

An objective of the present invention is to provide a ribbon assembly containing a matrix material which possesses the combination of properties to allow both mid-span access to the optical glass fibers using a solvent stripping method and end-access to the optical glass fibers using a heat stripping method.

Another objective of this invention is to provide a radiation-curable, matrix-forming composition, adapted for use in forming a ribbon assembly, which when coated on a plurality of coated optical glass fibers and suitably cured possesses the combination of properties to allow both mid-span access to the optical glass fibers using a solvent stripping method and end-access to the optical glass fibers using a heat stripping method.

The above objectives and other objectives are solved, according to the invention, with the features of claim 1 and claim 6, respectively.

Surprisingly, it has now been discovered that by adjusting and balancing (a) the glass transition temperature (hereinafter "Tg") and (b) the swell index of the matrix material, a matrix material for a ribbon assembly may be provided which possesses the combination of functional properties to allow both mid-span access to the optical glass fibers using a solvent stripping method and end-access to the optical glass fibers using a heat stripping method.

The invention relates to a ribbon assembly comprising a matrix material and a plurality of coated optical glass fibers bound together by the matrix material. The matrix material possesses a combination of swell index and Tg properties which allow both mid-span access to the optical glass fibers using a solvent stripping method and end-access to the optical glass fibers using a heat stripping method.

The invention also relates to a radiation- curable, matrix-forming composition which when coated on a plurality of coated optical glass fibers and suitably cured possesses a swell index and Tg which allows both mid-span access to the optical glass fibers using a solvent stripping method and end-access to the optical glass fibers using a heat stripping method.

The matrix forming composition comprises at least one monomer or oligomer which polymerizes upon exposure to radiation.

### DETAILED DESCRIPTION OF PREFERRED EMBODIMENTS

The matrix material can be composed of any conventional radiation-curable, matrix-forming coating composition which has been reformulated such that when the coating composition is cured, the matrix material possesses a swell index and Tg that provides the combination of both mid-span access to the optical glass fibers using a solvent stripping method and end-access to the optical glass fibers using a heat stripping method. Examples of conventional radiation curable, matrix forming compositions which can now be reformulated according to this invention are disclosed in U.S. Patent No. 4.844,604.

The radiation-curable, matrix-forming composition according to the present invention comprises as a main component at least one monomer or oligomer having a functional group capable of polymerization when exposed to radiation. Examples of such functional groups include epoxy groups, thiol-ene or amine-ene systems, and ethylenic unsaturation such as acrylamide, acrylate, methacrylate, vinylether, or maleate vinylether functionality. Preferably, the monomer or oligomer contain acrylate or methacrylate functionality.

The radiation-curable, matrix-forming composition can also contain a diluent having a functional group which is capable of copolymerizing with the functionality of the monomer or oligomer. The diluent may contain the same functional group described above for the oligomer or monomer. For example, the diluent can be an acrylate monomer, such as hexanediol diacrylate or trimethylol propane triacrylate.

The matrix forming composition can also further comprise a photoinitiator, stabilizer, or an antiblocking agent for their known function.

The swell index of the cured matrix material can be easily determined by measuring the initial volume of the matrix material, immersing the matrix material in a solvent, and then measuring the volume of the matrix material after immersion. The swell index is the percent change in volume of the matrix material.

The swell index of the matrix material will depend on the particular solvent selected. Any solvent can be used which (1) causes the matrix material to swell, and (2) which does not unacceptably and deleteriously affect the coatings on the optical glass fibers. Based on the disclosure provided herein, one skilled in the art will easily be able to determine which solvents are suitable for swelling the matrix material. Examples of suitable solvents have been found to be ethanol and/or isopropyl alcohol.

It is desirable that the matrix material swell in the solvent within a short period of time, such as within about 10 minutes or less, preferably within about 7 minutes or less. Preferably, the cured matrix material is immersed in the solvent at ambient working temperatures. However, if desired, the solvent can be heated to increase the speed of the swelling of the matrix material.

If the swell index of the matrix material is insufficient, one skilled in the art will easily be able to reformulate the matrix forming composition to increase the swell index of the matrix material. For example, the matrix forming composition can be reformulated to reduce the crosslink density. This can be accomplished by the reducing the amount of crosslinking agent, such as SR368 (Sartomer) which was used in the Examples below. Another suitable way of increasing the swell index would be to increase the amount of radiation-curable oligomer used in the matrix forming composition, such as Ebecryl 4842.

The swell index should be sufficient for the matrix material to be easily separated from the optical glass fibers by rubbing with an abrasive surface or peeling the swelled matrix material. An example of a suitable swell index has been found to be greater than 7 %, preferably at least about 10 %, and more preferably at least about 15 % by volume.

At the same time, for end-access using the heat stripping method, the Tg of the cured matrix material should be high enough to maintain sufficient structural integrity of the matrix material as it is being separated from the optical glass fibers. If the Tg is not sufficiently high to retain the structural integrity of the matrix material, the matrix material will disadvantageously break apart when it is being separated from the optical glass fibers.

The Tg of the cured matrix material should also be high enough such that when force is applied to the matrix material to separate the heat-softened matrix material from the optical glass fibers sufficient force is transmitted through the matrix material, and any intervening coatings present on the optical glass fibers, to the primary coating on the optical glass fibers to thereby separate the heat-softened primary coating from the optical glass fibers. In this manner, when the cured matrix material according to the invention is separated from the glass optical fibers, the matrix material and primary coatings can be efficiently and rapidly separated from the optical glass fibers, so as to provide bare optical glass fibers to which connections can be made.

The present invention avoids the problems associated with the conventional method of reducing the adhesion between the primary coating and the optical glass fiber to provide heat strippability. When the adhesion between the primary coating and the optical glass fiber is reduced to provide strippability, the primary coating can delaminate from the optical glass fiber in the presence of moisture, which can cause attenuation of the signal transmitted through the optical glass fiber. In the present invention, the adhesion between the primary coating and the glass optical fiber need not be reduced to provide heat strippability.

The temperature of the heat stripping tool required will depend on the Tg of the matrix material. The higher the Tg of the matrix temperature, the higher the temperature that can be applied to matrix material while retaining structural integrity of the matrix material. A typical temperature used to heat strip the matrix material is about 90°C.

One skilled in the art will recognize how to vary the components present in the matrix forming composition to provide a cured matrix material having the desired Tg. For example, such a person will know that the hydrodynamic volume of the oligomers or monomers present in the matrix forming composition can be increased which will generally increase the Tg of the cured matrix material. Furthermore, such a person will know that the cross-linking density in the cured matrix can be increased which will generally increase the Tg.

It has been found that a suitable Tg of the cured matrix material, to possess the property of end-access to the optical glass fibers using heat strippability, is at least about 60°, preferably at least about 80°C, and most preferably at least about 95°C. The Tg of a matrix material can be measured by a Dynamic Mechanical Analysis, using the temperature of the Tangent Delta Maximum as a convenient marker to identify this temperature.

The novel optical glass fiber ribbon assemblies made according to this invention can be used in telecommunication systems. Such telecommunication systems typically include optical glass fiber ribbon assemblies containing optical glass fibers, transmitters, receivers, and switches. The assemblies containing the optical glass fiber are the fundamental connecting units of telecommunication systems. The assemblies can be buried under ground or water for long distance connections, such as between cities.

The present invention will be further described by the following non-limiting examples.

### Examples

The invention will be further explained by the following non-limiting examples (E1-E7) and comparative examples (C1-C5). Radiation curable matrix forming compositions were made by combining the ingredients shown in the following Table 1. These compositions were then coated onto polyesterfilms and cured using a 1 Joule, fusion D-lamp, in a nitrogen atmosphere.

The swell index and the Tg of the cured matrix materials were then measured and the results are shown in Table 1.

**Table 1**

| Reactani | C1 | C2 | C3 | C4 | cs | E1 | E2 | E3 | E4 | E5 | E6 | E7 |
|---|---|---|---|---|---|---|---|---|---|---|---|---|
| Urethane Acrylate 1003H | | - | - | 50 | - | - | - | - | - | - | - | - |
| Urethane Acrylate 1004H | 49.35 | 36.22 | 16.1 | - | - | - | 32.2 | 16.10 | 24.68 | 16.1 | - | - |
| Urethane Acrylate 1003-9 | | | | | | | | | | - | 16.1 | 16.1 1 |
| Ebecryl 4842 | 0 | 12.08 | 16.1 | 0 | 74.5 | 49.35 | 32.2 | 40.25 | 24.66 | 40.25 | 40.25 | 40.25 |
| Lucerin TPO | - | - | - | 1.5 | - | - | - | - | - | - | - | 3.0 |
| Sartomer SR368 | 31.15 | 32.20 | 48.3 | 31.5 | - | 31.15 | 16.1 | 24.15 | 31.15 | 24.15 | 24.15 | 24.15 |
| Sartomer SR351 | - | - | - | - | 22.0 | - | - | - | - | - | - | - |
| Sartomer SR238 | 5 | 5 | 5 | 5 | - | 5 | 5 | 5 | 5 | 5 | 5 | 5 |
| Sartomer SR506 | 10 | 10 | 10 | - | - | 10 | 10 | 10 | 10 | - | - | - |
| IBOA | - | - | - | 10 | - | - | - | - | - | - | - | - |
| Tinuvin 292 | - | - | - | 0.5 | - | - | - | - | - | - | - | - |
| Vinylcaprolactam | - | - | - | - | - | - | - | - | | 10 | 10 | 10 |
| Inpacure 184 | 3 | 3 | 3 | - | 2.0 | 3 | 3 | 3 | - | 3 | 3 | - |
| Irganox 1010 | - | - | - | 0.5 | - | - | - | - | - | - | - | - |
| Irganox 1035 | - | - | - | - | - | - | - | - | - | - - | 0.5 | 0.5 |
| Irgenox 245 | 0.5 | 0.5 | 0.5 | - | 0.5 | 0.5 | 0.5 | 0.5 | - | 0.5 | - | - |
| DC-190 | 0.64 | 0.64 | 0.64 | 0.64 | 0.67 | 0.64 | 0.64 | 0.64 | - | 0.64 | 0.64 | 0.64 |
| DC-57 | 0.36 | 0.36 | 0.36 | 0.36 | 0.33 | 0.36 | 0.36 | 0.38 | 0.36 | 0.36 | 0.38 | 0.36 |
| Results | | | | | | | | | | | | |
| Swell Index (Volume %) | 4.9 | 4.9 | 4.9 | 7 | 31 | 25.2 | 36.4 | 25.2 | 14.7 | 19.9 | 19.9 | 19.9 |
| Glass Transition Temperature (°C) | 100.6 | - | 150.5 | 108 | 33 | 112.5 | 62 | 95.5 | 100 | 113 | 108 | 103 |

### Reactants:

Urethane acrylate 1003H:
   polyether based, aliphatic urethane acrylate oligomer having a number average molecular weight in the range of 1200-1400 and an average of 2 acrylate functional groups. Urethane acrylate 1004H: polyether based, aromatic urethane acrylate oligomer having a number average molecular weight in the range of 1300-1600 and an average of 2 acrylate functional groups.
Urethane acrylate 1003-9:
   polyether based, aliphatic urethane acrylate oligomer having a number average molecularweight in the range of 1300-1500 and an average of 2 acrylate functional groups.
Ebecryl 4842:
   silicone acrylate oligomer (Radcure Inc.).
Lucerin TPO:
   Diphenyl(2,4,6-trimethylbenzoyl)phosphine oxide and 2-hydroxy-1-methyl-1-phenyl-1-propanone (BASF).
SR238:
   1,5-hexadiol diacrylate (Sartomer).
SR351:
   Trimthylolpropane triacrylate (Sartomer).
SR368:
   Tris(2-hydroxy ethyl isicyanurate triacrylate) (Sartomer).
SR506:
   Isobomyl acrylate (Sartomer).
Tinuvin 292:
   Bis (1,2,2,6,6-pentamethyl-4-piperidinyl sebacate) (Ciba Geigy).
IBOA:
   Isobomyl acrylate (Radcure Inc.).
DC-57:
   di-methyl, methyl(polyethyleneoxide acetate-capped) siloxane, polyethylene glycol diacetate, polyethylene glycol allyletheracetate (TAB).
DC-190:
   di-methyl, methyl(propylpolyethylene oxide polypropylene oxide, acetate) siloxane (TAB).
lrgacure 184:
   1-hydroxycyclohexylphenyl ketone (Ciba Geigy).
Irganox 1010:
   tetrakis(methylene(3,5-di-tert-butyl-4-hydroxyhydrocinnamate))methane (Ciba Geigy).
Irganox 245:
   triethylene glycol bis (3-(3'-tert-butyl-4'-hydroxy-5'-methylphenyl(propionate))) (Ciba Geigy).

All of the matrix material examples according this invention exhibited the combination of a high Tg and a high swell index. Current ribbon assemblies, which are represented by comparative examples C1-C5, do not have matrix materials which posses the combination of properties to allow both mid-span access of the optical glass fibers using the solvent stripping method and end-access of the optical glass fibers using the heat stripping method.

### Test Procedures

### Swell Index

The swell index was measured by immersing the cured matrix materials in a 95% ethanol, 5% isopropyl alcohol solution for about 7 minutes at ambient room temperature. The swell index reported in Table 1 is the percent change in the volume of the matrix material after immersion in the solution.

### Tg

The elastic modulus (E'), the viscous modulus (E°), and the tan delta (E°/E') of the examples were measured using a Rheometrics Solids Analyzer (RSA-11), equipped with: 1) A personal computer having MS-DOS 5.0 operating system and having Rhios® software (Version 4.2.2 or later) loaded; 2) A liquid nitrogen controller system for low-temperature operation. The maximum value of the tan delta measured is the Tg.

The test samples were prepared by casting a film of the material, having a thickness in the range of 0.02 mm to 0.4 mm, on a glass plate. The sample film was cured using a UV processor. A specimen approximately 35 mm (1.4 inches) long and approximately 12 mm wide was cut from a defect-free region of the cured film. For soft films, which tend to have sticky surfaces, a cotton-tipped applicator was used to coat the cut specimen with talc powder.

The film thickness of the specimen was measured at five or more locations along the length. The average film thickness was calculated to ±0.001 mm. The thickness cannot vary by more than 0.01 mm overthis length. Another specimen was taken if this condition was not met. The width of the specimen was measured at two or more locations and the average value calculated to ± 0.1 mm.

The geometry of the sample was entered into the instrument. The length field was set at a value of 23.2 mm and the measured values of width and thickness of the sample specimen were entered into the appropriate fields.

Before conducting the temperature sweep, moisture was removed from the test samples by subjecting the test samples to a temperature of 80°C in a nitrogen atmosphere for 5 minutes. The temperature sweep used included cooling the test samples to about -60°C or about -80°C and increasing the temperature at about 1°/minute until the temperature reached a point at which the equilibrium modulus has been reached. The test frequency used was 1.0 radian/second.

## Claims

1. An optical glass fiber assembly comprising: a plurality of coated optical glass fibers; and a matrix material binding together said plurality of coated optical glass fibers **characterised in that** said matrix material has the combination of properties of:
(i) a swell index greater than 7% by volume as measured by immersing the cured matrix materials in a 95% ethanol, 5% isopropyl alcohol mixture at room temperature, which facilitates mid-span access to said optical glass fibers by a solvent stripping method of said matrix material from said optical glass fibers; and
(ii) a glass transition temperature of at least 60 °C to facilitate end-access to said optical glass fibers by a heat stripping method of said matrix material from said optical glass fibers at an end terminus of said optical glass fiber assembly.

2. An optical glass fiber assembly according to claim 1, wherein said matrix material has a swell index of at least about 10% by volume.

3. An optical glass fiber assembly according to any one of claims 1-2, wherein said matrix material has a swell index of at least about 15% by volume.

4. An optical glass fiber assembly according to any one of claims 1-3, wherein said matrix material has a glass transition temperature of at least about 80 °C.

5. An optical glass fiber assembly according to any one of claims 1-4, wherein said matrix material has a glass transition temperature of at least about 95 °C.

6. A radiation curable, matrix forming composition which when coated and suitably cured on a plurality of coated optical glass fibers provides the combination of properties of:
(i) a swell index greater than 7% by volume as measured by immersing the cured matrix materials in a 95% ethanol, 5% isopropyl alcohol mixture at room temperature, which facilitates mid-span access to said optical glass fibers by a solvent stripping method of said matrix material from said optical glass fibers; and
(ii) a glass transition temperature of at least 60 °C to facilitate end-access to said optical glass fibers by a heat stripping method of said matrix material from said optical glass fibers at an end terminus of said optical glass fiber assembly, said matrix forming composition comprising at least one monomer or oligomer which polymerizes upon exposure to radiation.

7. A telecommunications system comprising as fundamental connecting units an optical glass fiber assembly according to claim 1.

## Patentansprüche

1. Optische Glasfaseranordnung, umfassend eine Vielzahl von beschichteten optischen Glasfasern und ein Matrixmaterial, das die Vielzahl beschichteter optischer Glasfasern miteinander verbindet, **dadurch gekennzeichnet, daß** das Matrixmaterial die Kombination folgender Eigenschaften aufweist:
(i) einen Quellindex von größer als 7 Volumenprozent, gemessen indem man die gehärteten Matrixmaterialien bei Raumtemperatur in ein Gemisch aus 95 % Ethanol und 5 % Isopropylalkohol taucht, was Zugang an der Streckenmitte zu den optischen Glasfasern mittels Abisolieren des Matrixmaterials von den optischen Glasfasern durch ein Lösungsmittel erleichtert, und
(ii) eine Glasübergangstemperatur von mindestens 60 °C, um Endzugang zu den optischen Glasfasern mittels thermischen Abisolierens des Matrixmaterials von den optischen Glasfasern an einem Ende der optischen Glasfaseranordnung zu erleichtern.

2. Optische Glasfaseranordnung nach Anspruch 1, wobei das Matrixmaterial einen Quellindex von mindestens etwa 10 Volumenprozent aufweist.

3. Optische Glasfaseranordnung nach einem der Ansprüche 1 bis 2, wobei das Matrixmaterial einen Quellindex von mindestens etwa 15 Volumenprozent aufweist.

4. Optische Glasfaseranordnung nach einem der Ansprüche 1 bis 3, wobei das Matrixmaterial eine Glasübergangstemperatur von mindestens etwa 80 °C aufweist.

5. Optische Glasfaseranordnung nach einem der Ansprüche 1 bis 4, wobei das Matrixmaterial eine Glasübergangstemperatur von mindestens etwa 95 °C aufweist.

6. Strahlungsärtbare, matrixbildende Zusammensetzung, die, wenn sie auf eine Vielzahl von optischen Glasfasern aufgetragen und auf geeignete Weise gehärtet wird, die Kombination der Eigenschaften liefert:
(i) einen Quellindex von größer als 7 Volumenprozent, gemessen indem man die gehärteten Matrixmaterialien bei Raumtemperatur in ein Gemisch aus 95 % Ethanol und 5 % Isopropylalkohol taucht, was den Zugang an der Streckenmitte zu den optischen Glasfasern mittels Abisolieren des Matrixmaterials von den optischen Glasfasern durch ein Lösungsmittel erleichtert, und
(ii) eine Glasübergangstemperatur von mindestens 60°C, um Endzugang zu den optischen Glasfasern mittels thermischen Abisolierens des Matrixmaterials von den optischen Glasfasern an einem Ende der optischen Glasfaseranordnung zu erleichtern, wobei die matrixbildende Zusammensetzung mindestens ein Monomer oder Oligomer umfaßt, welches polymerisiert, wenn es Strahlung ausgesetzt wird.

7. Telekommunikationssystem, das als Grundverbindungseinheiten eine optische Glasfaseranordnung nach Anspruch 1 umfaßt.

## Revendications

1. Assemblage de fibres de verre optiques comprenant: une pluralité de fibres de verre optiques enrobées; et une matière de matrice liant ladite pluralité de fibres de verre optiques enrobées entre elles, **caractérisé en ce que** ladite matière de matrice a la combinaison de propriétés suivante:
(i) un indice de gonflement supérieur à 7% en volume, tel que mesuré en immergeant les matières de matrice durcies dans un mélange à 95% d'éthanol et 5% d'alcool isopropylique à température ambiante, qui facilite l'accès à mi-distance desdites fibres de verre optiques par un procédé de dénudage à l'aide d'un solvant desdites fibres de verre optiques d'avec ladite matière de matrice, et
(ii) une température de transition vitreuse d'au moins 60°C pour faciliter l'accès aux extrémités desdites fibres de verre optiques par un procédé de dénudage par la chaleur desdites fibres de verre optiques d'avec ladite matière de matrice à une extrémité dudit assemblage de fibres de verre optiques.

2. Assemblage de fibres de verre optiques selon la revendication 1, dans lequel ladite matière de matrice a un indice de gonflement d'au moins 10% environ en volume.

3. Assemblage de fibres de verre optiques selon l'une quelconque des revendications 1 et 2, dans lequel ladite matière de matrice a un indice de gonflement d'au moins 15% environ en volume.

4. Assemblage de fibres de verre optiques selon l'une quelconque des revendications 1 à 3, dans lequel ladite matière de matrice a une température de transition vitreuse d'au moins 80°C environ.

5. Assemblage de fibres de verre optiques selon l'une quelconque des revendications 1 à 4, dans lequel ladite matière de matrice a une température de transition vitreuse d'au moins 95°C environ.

6. Composition durcissable par rayonnement formant une matrice qui, lorsqu'elle est appliquée et durcie de manière appropriée sur une pluralité de fibres de verre optiques enrobées, offre la combinaison de propriétés suivante:
(i) un indice de gonflement supérieur à 7% en volume, tel que mesuré en immergeant les matières de matrice durcies à température ambiante dans un mélange à 95% d'éthanol et 5% d'alcool isopropylique, qui facilite l'accès à mi-distance desdites fibres de verre optiques par un procédé de dénudage à l'aide d'un solvant desdites fibres de verre optiques d'avec ladite matière de matrice, et
(ii) une température de transition vitreuse d'au moins 60°C pour faciliter l'accès aux extrémités desdites fibres de verre optiques par un procédé de dénudage par la chaleur desdites fibres de verre optiques d'avec ladite matière de matrice à une extrémité dudit assemblage de fibres de verre optiques, ladite composition formant une matrice comprenant au moins un monomère ou un oligomère qui polymérise lors d'une exposition à un rayonnement.

7. Système de télécommunications comprenant, en tant qu'unités de connexion fondamentales, un assemblage de fibres de verre optiques selon la revendication 1.
